# EUROPÄISCHE PATENTSCHRIFT

(11) **EP 4 177 088 B1**
(45) Veröffentlichungstag und Bekanntmachung des Hinweises auf die Patenterteilung: **22.04.2026**
(21) Anmeldenummer: 22186612.2
(22) Anmeldetag: 25.07.2022
(51) Int. Cl.: B60G 17/08, B60G 17/018

(54) **VERFAHREN ZUR BEEINFLUSSUNG EINER BEWEGUNG EINES FAHRZEUGAUFBAUS EINES FAHRZEUGS SOWIE FAHRZEUG**
METHOD FOR INFLUENCING A MOVEMENT OF A VEHICLE BODY OF A VEHICLE AND VEHICLE
PROCÉDÉ DESTINÉ À INFLUENCER UN MOUVEMENT D'UNE CARROSSERIE D'UN VÉHICULE AINSI QUE VÉHICULE

(30) Priorität: 05.11.2021 DE 102021212474
(43) Veröffentlichungstag der Anmeldung: 10.05.2023
(73) Patentinhaber: VOLKSWAGEN AG, 38440 Wolfsburg (DE)
(72) Erfinder: Schlegel, Jan-Rickmer, 38179 Groß Schwülper (DE); Zobel, Torsten, 38550 Isenbüttel (DE); Khatab, Shaady, 29378 Wittingen (DE)

(56) Entgegenhaltungen:
- US-A- 5 322 320
- KASHEM SAAD BIN ABUL ET AL: "A modified skyhook control system (SKDT) to improve suspension control strategy of vehicles", 2014 INTERNATIONAL CONFERENCE ON INFORMATICS, ELECTRONICS & VISION (ICIEV), IEEE, 23 May 2014 (2014-05-23), pages 1 - 8, XP032616166, ISBN: 978-1-4799-5179-6, [retrieved on 20140708], DOI: 10.1109/ICIEV.2014.6850696
- PEPE G ET AL: "VFC - Variational Feedback Controller and its application to semi-active suspensions", MECHANICAL SYSTEMS AND SIGNAL PROCESSING, ELSEVIER, AMSTERDAM, NL, vol. 76, 15 February 2016 (2016-02-15), pages 72 - 92, XP029494398, ISSN: 0888-3270, DOI: 10.1016/J.YMSSP.2016.01.002

## Beschreibung

Die Erfindung betrifft ein Verfahren zur Beeinflussung einer Bewegung eines Fahrzeugaufbaus eines Fahrzeugs, wobei wenigstens eine Aufbaubewegungsinformation des Fahrzeugaufbaus an zumindest einem Messpunkt des Fahrzeugaufbaus mittels eines Sensorsystems ermittelt wird. Ebenso betrifft die Erfindung ein Fahrzeug mit einem Fahrzeugaufbau, einem Sensorsystem und einem Steuerungs- und/oder Regelungssystem.

Dämpfer beziehungsweise Stoßdämpfer haben die Aufgabe, Schwingungen des Aufbaus eines Fahrzeugs auf den Tragfedern sowie die Schwingungen der Räder des Fahrzeugs auf der Reifenfeder zu dämpfen. Ohne eine Dämpfung würden die Aufbauschwingungen im Bereich der Eigenfrequenz zu groß, so dass sowohl der Fahrkomfort als auch die Fahrsicherheit negativ beeinflusst würden. Zu starke Dämpfer wiederum verschlechtern den Fahrkomfort, aber verbessern den Straßenkontakt. Insbesondere handelt es sich bei den Stoßdämpfern um sicherheitsrelevante Bauteile für ein Fahrwerk eines Fahrzeugs, die die Schwingungen der gefederten Masse schnell abklingen lassen sowie die Schwingungen der ungefederten Massen auf die Reifenfedern dämpfen.

Beispielsweise werden drei Dämpfersysteme für Fahrzeuge verwendet, wobei in einer Federanordnung zwischen Rad und Aufbau ein Aktor parallel geschaltet sein kann. Bekannt sind beispielsweise passive, semi-aktive und aktive Dämpfersysteme. Bei passiven Dämpfersystemen ist eine Veränderung der Dämpferkraft während des Fahrbetriebs nicht vorgesehen. Bei semi-aktiven Dämpfersystemen kann die Dämpferkraft durch eine Veränderung eines Ölfluidstroms unter Verwendung eines oder mehrerer Ventile verändert werden. Auf diese Art und Weise können die Dämpfungseigenschaften verändert werden. Semi-aktive Dämpfersysteme arbeiten rein energieabsorbierend. Bei aktiven Dämpfersystemen kann eine gewünschte Dämpferkraft sowohl dämpfend als auch energieeinbringend in jede Richtung bereitgestellt werden.

Bekannte reine Regelungen mittels einer Aufbaubewegung erzeugen beim geregelten Fahrwerk einen Zielkonflikt zwischen guter Aufbaubewegung und Radkomfort. Im geregelten Fahrwerk muss daher ein Kompromiss gefunden werden.

Weit verbreitet ist das Regelmodell eines sogenannten Skyhook-Reglers. Dieser Ansatz geht von der Idee aus, dass der Federungskomfort dann optimal ist, wenn man den schwingenden Aufbau nicht gegenüber der unebenen Straße, sondern gegenüber dem Himmel dämpft. In einem Gedankenexperiment wird der Schwingungsdämpfer nicht zwischen Aufbau und Rad, sondern zwischen Aufbau und einem mitgeführten Haken am Himmel angeordnet. Im Rahmen dieses Gedankenexperiments soll dann der reale Dämpfer die gleiche Kraft aufbringen wie der Skyhook-Dämpfer.

Eine solche radfrequente Ansteuerung mit dem Hin- und Herschalten eines 1-Ventil-Regeldämpfers bei jedem Zug-Druck- beziehungsweise Ein- und Ausfedervorgang ist aufgrund von Sensorlatenzen, Messungenauigkeiten, Stellgeschwindigkeiten des Dämpfers und Trägheiten des Systems mit Nachteilen behaftet. Zudem erzeugt das hochfrequente Hin-und Herschalten des Dämpfers sogenannte Poltergeräusche, die als negative Geräusche durch die Fahrer beziehungsweise Kunden wahrgenommen werden. Bisher wurden durch solch hohe Schaltgeschwindigkeiten verursachten Algorithmen durch eine Dämpfung der Stellgeschwindigkeit begegnet. Dies führt jedoch zu weiteren Latenzen in der Stellrate und dem Phasenverzug, wodurch sich die eigentlichen Vorteile des Skyhook-Reglers erübrigen.

Beispielsweise ist aus der DE 10 2008 052 990 A1 ein Verfahren zur Erzeugung von Signalen zur Beeinflussung eines in seinen Bewegungsabläufen steuerbaren oder regelbaren Fahrzeugaufbaus eines Kraftfahrzeugs bekannt. Hierbei erfolgt die Regelung in Abhängigkeit der Aufbaubewegung unter Berücksichtigung des Skyhook-Ansatzes. Beispielsweise ist aus *"*Kashem Saad Bin Abul ET AL: "A modified skyhook control system (SKDT) to improve suspension control strategy of vehicles", 2014 International Conference on Informatics, Electronics & Vision (ICIEV), 2014-05-23, IEEE, 23. Mai 2014(2014-05-23), Seite 1-8, XP032616166, DOI: 10.1109/ICIEV.2014.6850696, ISBN: 978-1-4799-5179-6, [gefunden am 2014-07-08*]"* eine modifizierte Skyhook-Steuerungsstrategie für ein semiaktives Federungssystem eines Fahrzeugs bekannt.

Ferner beschreibt *"*PEPE G ET AL, "VFC - Variational Feedback Controller and its application to semi-active suspensions", MECHANICAL SYSTEMS AND SIGNAL PROCESSING, ELSEVIER, AMSTERDAM, NL, Bd.76, (2016-02-15), Seiten 72-92, DOI:10.1016/J.YMSSP.2016.01.002, ISSN 0888-3270, XP029494398*"* eine Steuerungsstrategie, mit der versucht wird, einen speziellen Fall der Pontryagin-Technik zu entwickeln, der es ermöglicht, von einem Open-Loop-Kontrollprogramm zu einem geschlossenen Kreislauf-Controller überzugehen, eine Gelegenheit, die im Allgemeinen nicht durch basierte Kontrollen genutzt wird. Dieser neue Ansatz wird hier systematisch angewendet, um eine ganze Familie neuer Controller zu offenbaren. Als Sonderfall gibt diese Methode auch eine strenge theoretische Grundlage für die Sky-Hook- und Bodenhakenkontrolle.

Ferner offenbart die US 5 322 320 A ein Verfahren gemäß dem Oberbegriff des Anspruchs 1 und beschreibt ein Stoßdämpfer-System für ein Fahrzeug, welches mindestens eine Hochfrequenz-Komponente verwendet, das in Federmassevibrationen als Faktor zur Steuerung einer Dämpfungskraft eines Stoßdämpfers enthalten ist. Das System liefert eine geringere Dämpfungskraft des Stoßdämpfers mit einer größeren Magnitude des Hochfrequenzbauteils, wenn Anzeichen einer gefederten Massengeschwindigkeit und einer relativen Geschwindigkeit zwischen einer Federmasse und einer ungefederten Masse zusammenfallen.

Somit besteht eine Aufgabe der vorliegenden Erfindung darin, dass zunächst die eingangs genannten Probleme beziehungsweise Nachteile gelöst werden können, ohne die Dämpfer des Fahrzeugs hart zu schalten und ohne geräuschliche Auffälligkeiten zu erzeugen. Diese Aufgabe wird durch ein Verfahren und ein Fahrzeug gemäß den unabhängigen Patentansprüchen gelöst. Sinnvolle Weiterbildungen ergeben sich aus den abhängigen Patentansprüchen.

Ein Aspekt der Erfindung betrifft ein Verfahren zur Beeinflussung einer Bewegung eines Fahrzeugaufbaus eines Fahrzeugs, wobei wenigstens eine Aufbaubewegungsinformation des Fahrzeugaufbaus an zumindest einem Messpunkt des Fahrzeugaufbaus mittels eines Sensorsystems ermittelt wird, aufweisend:
- Ermitteln wenigstens einer Dämpferbewegungsinformation zumindest eines Dämpfers des Fahrzeugs, mit welchem die Bewegung des Fahrzeugaufbaus beeinflusst werden kann, mittels eines Sensorsystems;
- Bereitstellen der ermittelten wenigstens einen Dämpferbewegungsinformation und der ermittelten wenigstens einen Aufbaubewegungsinformation an eine Auswerteeinheit;
- Bestimmen eines Einstellparameters in Abhängigkeit von einem Verhältnis zwischen der wenigstens einen Dämpferbewegungsinformation und der wenigstens einen Aufbaubewegungsinformation durch die Auswerteeinheit;
- Bereitstellen der wenigstens einen Aufbaubewegungsinformation als erste Eingangsgröße an eine Steuer- und/oder Regeleinheit des Fahrzeugs, mit welchem der zumindest eine Dämpfer angesteuert werden kann, und Bereitstellen des ermittelten Einstellparameters als zweite Eingangsgröße an die Steuer-und/oder Regeleinheit;
- Ermitteln wenigstens eines Steuersignals in Abhängigkeit von der ersten und der zweiten Eingangsgröße mittels der Steuer- und/oder Regeleinheit und Bereitstellen des Steuersignals als Ausgangsgröße der Steuer- und/oder Regeleinheit; und
- Ansteuern des zumindest einen Dämpfers mit dem ermittelten wenigstens einen Steuersignal, wodurch die Bewegung des Fahrzeugaufbaus beeinflusst wird.

Durch das vorgeschlagene Verfahren kann der Fahrkomfort von Passagieren eines Fahrzeugs verbessert werden. Durch das vorgeschlagene Verfahren kann eine bessere, insbesondere harmonischere, Bewegung des Fahrzeugaufbaus eingehalten werden, da der zumindest eine Dämpfer nicht nur in Abhängigkeit von der Aufbaubewegung, sondern auch unter Berücksichtigung der Dämpferbewegung angesteuert beziehungsweise gesteuert wird. Durch die Berücksichtigung der Dämpferbewegungsinformation und der Aufbaubewegungsinformation kann der zumindest eine Dämpfer derart angesteuert beziehungsweise betrieben werden, dass hohe Gradienten in dem Dämpfungsvorgang verhindert werden können und die Ansteuerung des zumindest einen Dämpfers phasengenau durchgeführt werden kann. Des Weiteren kann durch die Ansteuerung des zumindest einen Dämpfers unter Berücksichtigung der Dämpferbewegungsinformation und der Aufbaubewegungsinformation die eingangs genannten Probleme der geräuschlichen Auffälligkeiten im Fahrzeug verhindert, insbesondere reduziert werden. Somit nimmt ein Passagier im Fahrgastinnenraum des Fahrzeugs den Dämpfungsvorgang nicht störend wahr.

Durch die Berücksichtigung des Einstellparameters für die Ansteuerung des zumindest einen Dämpfers kann dieser Dämpfer weich geschaltet beziehungsweise betrieben werden, so dass auf ein unnötiges hartes Umschalten verzichtet werden kann. Dies spiegelt sich in einer harmonischen Dämpfung des Fahrzeugaufbaus beziehungsweise des Fahrzeugs vorteilhaft wieder.

Insbesondere kann mit Hilfe des vorgeschlagenen Verfahrens ein phasengesteuerter "Skyhook-Regler-Ansatz" mit Reduzierung der Stellgradienten erreicht werden. Mit anderen Worten ausgedrückt ermöglicht das vorgeschlagene Verfahren die Einhaltung der Vorteile der aus dem Stand der Technik bekannten "Skyhook-Regler" zusätzlich zu den oben genannten Vorteilen des erfindungsgemäßen Verfahrens.

Mit Hilfe des vorgeschlagenen Verfahrens kann ein 1-Ventil-Regeldämpfer derart softwaremäßig verändert, parametriert und/oder modifiziert werden, dass dieser ein Verhalten eines 2-Ventil-Regeldämpfers nachahmt. Somit kann der Einsatz von teuren, komplexen und aufwendigeren 2-Ventil-Regeldämpfern vermieden werden. Dies wird dadurch erreicht, dass ein 1-Ventil-Regeldämpfer mit dem erfindungsgemäßen Verfahren betrieben wird. Somit können insbesondere Bauraum, Kosten und Konstruktionszeit minimiert werden.

Insbesondere kann durch das vorgeschlagene Verfahren der Zielkonflikt "Das Fahrzeug bewegt sich kaum, jedoch auf schlechter Straße macht sich die Unebenheit bemerkbar, und Unebenheiten in der Straße werden durch weiche Dämpfereinstellungen nicht auf den Aufbau übertragen, aber dafür schwingt das Fahrzeug" gelöst werden. Mit anderen Worten ausgedrückt ermöglicht das vorgeschlagene Verfahren, dass sich die Dämpfung des Fahrzeugs sowohl bei guten Straßenverhältnissen als auch bei schlechten Straßenverhältnissen angenehm für die Passagiere anfühlt und sich somit ein verbesserter Fahrkomfort ergibt und dass Unebenheiten in der Straße durch die Dämpfer ausgeglichen werden können, ohne dass das Fahrzeug und insbesondere der Fahrzeugaufbau negativ schwingen. Durch das vorgeschlagene Verfahren kann insbesondere eine Abstimmung zwischen Fahrkomfort und Fahrsicherheit, insbesondere aus Kundensicht, verbessert werden. Somit können Anforderungen an die Fahrdynamik und insbesondere an den Fahrkomfort deutlich besser erfüllt werden.

Durch die Ansteuerung des zumindest einen Dämpfers mit dem ermittelten wenigstens einen Steuersignal kann das Betreiben des Dämpfers anschließend unauffällig in Bezug auf akustische Störungen erfolgen. Ebenso ermöglicht dies einen deutlich beruhigteren Fahrzeugaufbau unter Beibehalten des Radkomforts gegenüber insbesondere den bisher bekannten 1-Ventil-Systemen. Des Weiteren ermöglicht das vorgeschlagene Verfahren eine fahrmodusabhängige Differenzierung des Fahrverhaltens des Fahrzeugs. Mit Hilfe des angesteuerten zumindest einen Dämpfers kann eine gedämpfte harmonische Bewegung des Fahrzeugaufbaus erreicht werden, die den Passagieren des Fahrzeugs ein komfortables Fahrgefühl übermitteln.

Unter dem Fahrzeugaufbau ist insbesondere die Karosserie des Fahrzeugs zu verstehen, wobei sich der Fahrzeugaufbau auf einem tragenden Fahrgestell befindet. Insbesondere ist der Fahrzeugaufbau in seinen Bewegungsabläufen steuerbar oder regelbar. Mit Hilfe des Sensorsystems, welches beispielsweise aus mehreren Sensoreinheiten beziehungsweise Erfassungseinheiten besteht, kann wenigstens eine Aufbaubewegungsinformation und/oder mehrere Aufbaubewegungsinformationen ermittelt beziehungsweise erfasst werden. Insbesondere kann der Fahrzeugaufbau mehrere Messpunkte aufweisen, so dass an mehreren Stellen beziehungsweise Positionen des Fahrzeugaufbaus Informationen bezüglich einer Bewegung des Fahrzeugaufbaus ermittelt werden können. Somit können umfangreiche und informationserweiterte Informationen bezüglich der Bewegung des Fahrzeugaufbaus ermittelt, insbesondere gesammelt werden. Beispielsweise können die Messpunkte an einer jeweiligen, zum Fahrzeugunterboden gerichteten Unterseite des Fahrzeugaufbaus angebracht werden, so dass beispielsweise die Messpunkte als Auflageflächen beziehungsweise Aufliegeflächen bezeichnet werden können. An diesen Aufliegeflächen können beispielsweise Sensoren des Sensorsystems angebracht werden.

Beispielsweise kann das Fahrzeug den zumindest einen Dämpfer oder mehrere Dämpfer aufweisen. Beispielsweise kann der zumindest eine Dämpfer oder die mehreren Dämpfer als Stoßdämpfer oder als Aktoren bezeichnet werden. Beispielsweise kann im Bereich eines jeweiligen Fahrzeugreifens ein Dämpfer angeordnet sein. Mit Hilfe der Dämpfer kann eine Bewegung des Fahrzeugs gegenüber dem Fahrzeugaufbau gedämpft werden. Beispielsweise kann an dem zumindest einen Dämpfer ein Sensor beziehungsweise eine Sensoreinheit eines Sensorsystems angeordnet sein, mit welchen eine Bewegung des Dämpfers als Information ermittelt werden kann. Die ermittelte wenigstens eine Dämpferbewegungsinformation und die ermittelte wenigstens eine Aufbaubewegungsinformation können der Auswerteeinheit, insbesondere einer elektronischen Auswerteeinheit beziehungsweise Recheneinheit übermittelt werden. Beispielsweise kann die Auswerteeinheit Bestandteil eines zur Steuerungs- und/oder Regelungssystem sein. Ebenso denkbar, dass die Auswerteeinheit Teil eines Fahrzeugsystems des Fahrzeugs oder Teil eines Backends oder eines Serversystems ist.

Mit Hilfe der elektronischen Auswerteeinheit wird die wenigstens eine Dämpferbewegungsinformation zu der wenigstens einen Aufbaubewegungsinformation im Verhältnis beziehungsweise in Relation gesetzt. Durch dieses Verhältnis kann anschließend der Einstellparameter bestimmt beziehungsweise berechnet beziehungsweise ermittelt werden. Bei dem Einstellparameter kann es sich beispielsweise um einen Faktor beziehungsweise Wirkfaktor handeln. Ebenso kann durch das Verhältnis eine Funktion gebildet werden, wobei der Einstellparameter einen Wert dieser Funktion sein kann.

Beispielsweise kann der zumindest eine Dämpfer mittels einer Steuer- und/oder Regeleinheit angesteuert beziehungsweise gesteuert werden. Beispielsweise kann die Steuer- und/oder Regeleinheit als Dämpferregler oder als Aktoreneinheit bezeichnet werden. Die Steuer-und/oder Regeleinheit, welche beispielsweise als Steuer- und/oder Regelmodul ausgebildet sein kann, weist zwei Eingänge beziehungsweise Signaleingänge und einen Ausgang beziehungsweise Signalausgang auf. Der erste Eingang weist als erste Eingangsgröße die wenigstens eine Aufbaubewegungsinformation auf. Somit erhält die Steuer- und/oder Regeleinheit als erstes Eingangssignal ein Signal betreffend die Aufbaubewegungsinformation. Des Weiteren kann als zweites Eingangssignal ein Signal betreffend den Einstellparameter bereitgestellt werden. Somit erhält die Steuer- und/oder Regeleinheit zwei Eingangsgrößen, insbesondere zwei Eingangssignale, welche in der Steuer- und/oder Regeleinheit verarbeitet werden. Dabei können beispielsweise die bereitgestellten Informationen der Eingänge durch mathematische Operationen und/oder mathematische Funktionen kombiniert werden beziehungsweise verarbeitet werden. Als Ausgangssignal kann die Steuer- und/oder Regeleinheit in ihrem Ausgang ein Steuersignal als Ausgangsgröße bereitstellen. Mit diesem Steuersignal kann der zumindest eine Dämpfer übermittelt beziehungsweise übertragen werden. Insbesondere kann die Steuer- und/oder Regeleinheit mehrere Dämpfer des Fahrzeugs ansteuern. In diesem Fall kann die Steuer-und/oder Regeleinheit mehrere Ausgänge aufweisen, so dass für jeden Dämpfer ein Steuersignal bereitgestellt werden kann. Ebenso denkbar ist es, dass jeder Dämpfer des Fahrzeugs eine eigene Steuer- und/oder Regeleinheit aufweist. Ebenso möglich ist, dass mit dem Steuersignal mehrere Dämpfer des Fahrzeugs gleichzeitig beziehungsweise synchron angesteuert werden können. Insbesondere erfolgt die Ansteuerung des zumindest einen Dämpfers automatisch, so dass die Bewegung des Fahrzeugaufbaus an die jeweilige Fahrsituation dynamisch angepasst werden kann.

Das Sensorsystem kann beispielsweise Radwegsensoren und/oder Beschleunigungssensoren aufweisen

Bei dem Fahrzeug kann es sich insbesondere um ein Kraftfahrzeug wie einen Personenkraftwagen oder Lastkraftwagen handeln. Insbesondere kann das vorgeschlagene Verfahren an den unterschiedlichsten Fahrzeugtypen angewendet werden.

In einem Ausführungsbeispiel der Erfindung ist vorgesehen, dass mit dem zumindest einen angesteuerten Dämpfer eine Vertikaldynamik des Fahrzeugs dynamisch angepasst wird. Insbesondere kann mit Hilfe des angesteuerten beziehungsweise gesteuerten Dämpfers die Vertikaldynamik des Fahrzeugs dynamisch an eine aktuelle Fahrsituation, ein aktuelles Fahrverhalten und/oder einen aktuellen Fahrmodus des Fahrzeugs angepasst beziehungsweise adaptiert werden. Dadurch kann eine harmonische Bewegung des Fahrzeugaufbaus derart erfolgen, dass die jeweilige Situation des Fahrzeugs berücksichtigt wird. Insbesondere ist dies dann der Fall, wenn es sich um unebene Straßen beziehungsweise Straßenverläufe, wie Kopfsteinpflaster, Feldwege, Schlaglöcher handelt. Durch die dynamisch angepasste Vertikaldynamik des Fahrzeugs beziehungsweise Fahrzeugaufbaus kann der Komfort der Passagiere in der Fahrgastzelle erhöht werden. Des Weiteren ist die dynamisch angepasste Fahrdynamik für eine zu transportierende Ladung des Fahrzeugs vorteilhaft. Durch die angepasste Fahrdynamik kann eine geringere Ladegutbeanspruchung erreicht werden. Insbesondere ergibt die angepasste Fahrdynamik eine geringere Fahrbahnbeanspruchung, so dass insbesondere die Beanspruchung des Fahrzeugs an sich verringert werden kann, wodurch sich insbesondere die Lebensdauer des Fahrzeugs beziehungsweise der einzelnen Bestandteile des Fahrzeugs deutlich erhöhen kann beziehungsweise können.

Für die Vertikaldynamik spielen vertikale Kräfte eine wesentliche Rolle. Diese vertikalen Kräfte bestehen im Wesentlichen aus Feder- und Dämpferkräften, die dafür sorgen, dass der Fahrzeugaufbau relativ zum Fahrwerk abgestützt wird und dass die Bewegungen des Fahrzeugs relativ zur Fahrbahn in Grenzen gehalten werden. Insbesondere können für die Anpassung der Vertikaldynamik Fahrbahnunebenheiten, Wank- und Nickvorgänge des Fahrzeugs bei quer- und längsdynamischen Manövern oder aber auch interne Anregungen, wie Antriebsstrang oder Rad-Reifen, werden vertikale Kräfte erzeugt, die zwischen Fahrwerk und Aufbau wirken, berücksichtigt werden. Vor allem die resultierenden Kräfte aus Fahrbahnunebenheiten erzeugen vertikale Störgrößen in Bezug auf Schwingungen des Fahrzeugs. Durch die angepasste Vertikaldynamik des Fahrzeugs können eine geringere Aufbaubeschleunigung, geringere Wank- und Nickbewegungen, geringere dynamische Radlastschwankungen sowie ein verbessertes Schwingungsverhalten des Fahrzeugs erreicht werden.

Durch die angepasste beziehungsweise optimierte Vertikaldynamik kann der Fahrzeugaufbau ähnlich einem Sportfahrmodus gehalten werden und erhält beispielsweise den Radkomfort eines Fahrzeugkomfortmodus.

Insbesondere kann mit Hilfe der angepassten Vertikaldynamik eine Überarbeitung der Vertikalregelung durchgeführt werden.

In einem weiteren Ausführungsbeispiel der Erfindung ist vorgesehen, dass mit dem wenigstens einen Steuersignal der zumindest eine Dämpfer derart gesteuert beziehungsweise angesteuert wird, dass eine Dämpfercharakteristik, insbesondere eine Dämpferhärte, des zumindest einen Dämpfers angepasst wird. Anders ausgedrückt kann mit Hilfe des angesteuerten Dämpfers die Dämpfercharakteristik und/oder die Dämpferhärte des zumindest einen Dämpfers verändert beziehungsweise eingestellt beziehungsweise parametriert werden, so dass der Dämpfer beispielsweise an die aktuelle Fahrsituation, das aktuelle Fahrverhalten und/oder den aktuellen Fahrmodus des Fahrzeugs angepasst ist. Somit kann der Dämpfer für eine verbesserte harmonische Bewegung des Fahrzeugaufbaus eingestellt werden.

Insbesondere kann das Fahrzeug beziehungsweise der Fahrzeugaufbau mittels der angepassten beziehungsweise applizierbaren Dämpferhärte modusabhängig beziehungsweise fahrmodusabhängig gedämpft beziehungsweise bedämpft werden.

Es ist erfindungsgemäß vorgesehen, dass eine Geschwindigkeit der Bewegung des Fahrzeugaufbaus als wenigstens eine Aufbaubewegungsinformation und eine Dämpfergeschwindigkeit des zumindest einen Dämpfers als wenigstens eine Dämpferbewegungsinformation ermittelt wird. Folglich werden für das Ermitteln des Einstellparameters und für das Ermitteln des wenigstens einen Steuersignals Geschwindigkeitswerte beziehungsweise geschwindigkeitsabhängige Werte verwendet. Somit kann das Steuersignal als geschwindigkeitsabhängiges Signal beziehungsweise geschwindigkeitsabhängige Stellgröße bezeichnet werden. Insbesondere handelt es sich bei der Geschwindigkeit des sich bewegenden Fahrzeugaufbaus um eine Geschwindigkeit des Fahrzeugaufbaus in vertikaler Richtung beziehungsweise vertikaler Auslenkung des Fahrzeugaufbaus. Mit anderen Worten handelt es sich hierbei um die Geschwindigkeit, welche der Fahrzeugaufbau bei seiner Bewegung erfährt. Bei einer Dämpfergeschwindigkeit handelt es sich dabei um die Geschwindigkeit beziehungsweise der relativen Geschwindigkeit des Dämpfers, wenn der Dämpfer eine Dämpfung beziehungsweise eine Dämpferbewegung beziehungsweise einen Dämpfungsvorgang durchführt.

Insbesondere handelt es sich bei der Bewegung des Dämpfers und insbesondere bei der Geschwindigkeit des Dämpfers um relative Bewegungen von Dämpferbestandteilen beziehungsweise Dämpferteilen des Dämpfers zueinander. Somit kann die Bewegung des Dämpfers als eine In-sich-Bewegung verstanden werden. Beispielsweise kann die Dämpfergeschwindigkeit bezüglich einer Federgeschwindigkeitsrichtung einer Federung des Dämpfers betrachtet werden. Beispielsweise können die Geschwindigkeit der Bewegung des Fahrzeugaufbaus und die Dämpfergeschwindigkeit mittels Radwegsensoren oder Beschleunigungssensoren des Sensorsystems und/oder eines Sensorsystems ermittelt beziehungsweise erfasst werden.

Es ist erfindungsgemäß vorgesehen, dass für das Bestimmen des Einstellparameters die Dämpfergeschwindigkeit zu der Geschwindigkeit der Bewegung des Fahrzeugaufbaus ins Verhältnis gesetzt wird, wobei mit dem Verhältnis von Dämpfergeschwindigkeit zu dieser Geschwindigkeit eine Funktion gebildet wird. Somit kann beispielsweise mittels der gebildeten Funktion zu einem jeweiligen Zeitpunkt ein spezieller Funktionswert abgerufen werden, welcher zu diesem jeweiligen Zeitpunkt ein jeweiliges Verhältnis von Dämpfergeschwindigkeit zu der Geschwindigkeit bezüglich des Fahrzeugaufbaus widerspiegelt. Insbesondere kann das Verhältnis zwischen der Dämpfergeschwindigkeit zu der Geschwindigkeit der Bewegung des Fahrzeugaufbaus beispielsweise zwischen 0 und 1 liegen. Somit kann in der jeweiligen Situation des Fahrzeugs das an die Situation angepasste Verhältnis zwischen der Dämpfergeschwindigkeit und Geschwindigkeit der Bewegung des Fahrzeugaufbaus für die Ansteuerung des zumindest einen Dämpfers verwendet werden. Insbesondere kann somit mit Hilfe des Verhältnisses zu einem jeweiligen Zeitpunkt ein jeweiliger Einstellparameter beziehungsweise Faktor bereitgestellt und somit verarbeitet werden. Der jeweilige Faktor als Einstellparameter kann dabei über eine Kennlinie, welche durch die zuvor gebildete Funktion gebildet ist, gebildet werden. Die Kennlinie ist durch das jeweilige Verhältnis der Geschwindigkeiten parametrierbar. Mit anderen Worten ist der Faktor, also der Einstellparameter, über die Dämpfergeschwindigkeit und die Geschwindigkeit der Bewegung des Fahrzeugaufbaus wählbar beziehungsweise variierbar beziehungsweise parametrierbar. Beispielsweise kann als Eingangsgröße der zuvor geschilderten Kennlinie das Verhältnis beziehungsweise die Funktion aus den beiden Geschwindigkeiten verwendet werden.

In einem Ausführungsbeispiel ist vorgesehen, dass die Ausgangsgröße der Steuer- und/oder Regeleinheit so ermittelt wird, indem ein zeitlicher Wert eines zeitlichen Verlaufs der Geschwindigkeit der Bewegung mit einem zeitlich dazu korrespondierenden Funktionswert eines zeitlichen Verlaufs der Funktion multipliziert wird. Dadurch ergibt sich der Vorteil, dass die Beeinflussung der Bewegung des Fahrzeugaufbaus ein andauernder, insbesondere fortdauernder Vorgang ist, welcher über einen Zeitraum kontinuierlich fortgesetzt werden kann. Sollte mit Hilfe des zumindest einen Dämpfers beispielsweise eine Unebenheit in der Fahrbahn durch Dämpfung ausgeglichen werden, so erfolgt die Ansteuerung des Dämpfers so lange, bis beispielsweise das Fahrzeug wieder auf einem ebenen Untergrund fährt. Dazu ist es besonders vorteilhaft, wenn nicht ein und derselbe Einstellparameter beziehungsweise ein und derselbe Wert verwendet wird, sondern sich der Einstellparameter fortlaufend an die jeweilige Situation anpasst. Dies kann über einen zeitlichen Verlauf durchgeführt werden.

Dazu wird die Geschwindigkeit der Bewegung des Aufbaus zeitlich beispielsweise in einem Diagramm oder einem Graphen aufgetragen. Dabei kann zu jedem bestimmten zeitlichen Wert beziehungsweise Zeitpunkt des zeitlichen Verlaufs der Geschwindigkeit der Bewegung des Fahrzeugaufbaus ein Wert betrachtet werden. Dieser zeitliche Wert, also ein Geschwindigkeitswert der Bewegung des Fahrzeugaufbaus zu diesem Zeitpunkt, wird mit einem zeitlich dazu korrespondierenden Funktionswert des zeitlichen Verlaufs der Funktion bezüglich des Verhältnisses der Geschwindigkeiten multipliziert beziehungsweise aktualisiert. Somit wird jeder augenblickliche Geschwindigkeitswert der Bewegung des Fahrzeugaufbaus mit einem dazu zeitlich korrespondierenden ebenso augenblicklichen Wert der Funktion bezüglich der Geschwindigkeitsverhältnisse faktorisiert. Dadurch kann eine dynamisch angepasste Ansteuerung des Dämpfers erfolgen. Mit anderen Worten erfolgt eine zeitlich abgestimmte Ansteuerung des Dämpfers, so dass zu jeder augenblicklichen Situation bezüglich des Fahrzeugs beziehungsweise des Fahrzeugaufbaus ein an dies angepasstes Steuersignal für den zumindest einen Dämpfer erzeugt beziehungsweise generiert werden kann. Folglich kann die Bewegung des Fahrzeugaufbaus noch besser harmonisch angepasst beziehungsweise gedämpft werden, so dass der Fahrkomfort für die Fahrzeugpassagiere erhöht werden kann.

Es ist es des Weiteren erfindungsgemäß vorgesehen, dass in Abhängigkeit von der Dämpferbewegungsinformation eine Stromstärke des zumindest einen Dämpfers variiert wird. Dadurch kann insbesondere die Dämpfeigenschaft beziehungsweise der Dämpfungsvorgang des zumindest einen Dämpfers jederzeit variiert beziehungsweise angepasst werden. In Abhängigkeit von der Dämpferbewegungsinformation kann eine Höhe der Stromstärke, mit welcher der zumindest eine Dämpfer betrieben wird, angepasst werden. Somit kann zu jeder Situation der aktuelle Betriebszustand des zumindest einen Dämpfers dynamisch verändert werden. Durch die variabel gestaltete Stromstärke, mit welcher der Dämpfer betrieben wird, kann beispielsweise eine härtere oder weichere Dämpfung durchgeführt werden. Insbesondere ist die variabel einstellbare Stromstärke des Dämpfers besonders vorteilhaft, um eine besonders harmonische Bewegung des Fahrzeugaufbaus zu erreichen. Beispielsweise kann bei einer hohen Dämpfergeschwindigkeit die Stromstärke des Dämpfers verringert beziehungsweise reduziert werden, um ein auftretendes Frequenzverhärten zu verhindern. Somit kann bei einer sehr hohen Dämpfergeschwindigkeit, bei welcher der Dämpfer negative Eigenschaften einnehmen kann, frühzeitig entgegengewirkt werden, indem die Stromstärke des zumindest einen Dämpfers entsprechend variiert wird.

Es ist erfindungsgemäß vorgesehen, dass mit der Aufbaubewegungsinformation eine Relation zwischen der Stromstärke des zumindest einen Dämpfers zu der Geschwindigkeit der Bewegung als zweite Eingangsgröße der Steuer- und/oder Regeleinheit bereitgestellt wird. Dadurch kann beispielsweise als Eingangsgröße der Steuer- und/oder Regeleinheit bereits ein entsprechender Strom beziehungsweise Stromwert bereitgestellt werden, welcher im Stand der Technik bisher für die reine aufbaubewegungsabhängige Steuerung des Dämpfers verwendet wurde. Diese nun bereitgestellte Stromstärke beziehungsweise ein entsprechendes Signal, welches die Stromstärke charakterisiert, kann mit dem Einstellparameter beispielsweise multipliziert werden, so dass das Steuersignal entsprechend ermittelt und dem Dämpfer zur Verfügung gestellt werden kann. Beispielsweise kann dadurch als Ausgangsgröße ein angepasster Vertikalstrom zum Ansteuern des zumindest einen Dämpfers bereitgestellt werden.

Mit anderen Worten ausgedrückt kann die Steuer- und/oder Regeleinheit so verstanden werden, dass mittels ihrer Eingangsseite eine vorgegebene Stromstärke mit dem Geschwindigkeitsverhältnis multipliziert wird, so dass an der Ausgangsseite ein entsprechend neu ermittelter Vertikalstrom für die Ansteuerung beziehungsweise die Steuerung beziehungsweise den Betrieb des Dämpfers vorliegt.

Des Weiteren kann dadurch in Abhängigkeit von dem Verhältnis zwischen den beiden Geschwindigkeiten der Vertikalstrom reduziert werden, wenn es die Situation erfordert. Dies kann beispielsweise dann der Fall sein, wenn der Dämpfer in einer aktuellen Momentaufnahme nicht oder in der verkehrten Richtung arbeitet und somit die Bewegung des Fahrzeugaufbaus nicht oder negativ beeinflusst. In diesem Fall kann der Vertikalstrom auf der Ausgangsseite reduziert werden.

In einem Ausführungsbeispiel ist vorgesehen, dass die Dämpferbewegungsinformation mit einem Dämpfersignal und die Aufbaubewegungsinformation mit einem Aufbausignal der Auswerteeinheit bereitgestellt werden, wobei das Dämpfersignal und das Aufbausignal in einem vorgegebenen Frequenzbereich gefiltert werden. Beispielsweise können die Informationen bezüglich der Dämpferbewegung und der Aufbaubewegung als digitale beziehungsweise elektrische Signale bereitgestellt werden. Beispielsweise kann dabei mit dem Dämpfersignal die Dämpfergeschwindigkeit und mit dem Aufbausignal die Geschwindigkeit der Bewegung des Fahrzeugaufbaus der Auswerteeinheit übermittelt beziehungsweise übertragen werden. Um eventuelle beziehungsweise auftretende Störungen beziehungsweise Störgrößen eliminieren beziehungsweise unterdrücken zu können, können das Aufbausignal und das Dämpfersignal gefiltert beziehungsweise vorgefiltert werden. Dies erfolgt mit einem digitalen Filter, welcher beispielsweise Bestandteil der Auswerteeinheit oder dieser vorgeschaltet ist. Beispielsweise kann mit Hilfe einer Filtereinheit eine parametrierbare Filterung der Signale zur Laufzeit der verwendeten Signale durchgeführt werden.

Beispielsweise kann somit eine parametrierbare unabhängige Filterung zur Laufzeit von Aufbau- und Dämpferwegsignalen erreicht werden.

In einem weiteren Ausführungsbeispiel der Erfindung ist vorgesehen, dass der Einstellparameter in Abhängigkeit von einem Fahrmodus des Fahrzeugs verändert wird. Mit anderen Worten ausgedrückt kann der Einstellparameter, also der Faktor beziehungsweise der Funktionswert der Funktion der Geschwindigkeitsverhältnisse, in Abhängigkeit von einem aktuellen Fahrmodus des Fahrzeugs eingestellt beziehungsweise angepasst werden. Dies kann beispielsweise mit Hilfe der Steuer- und/oder Regeleinheit durchgeführt werden. Dies hat den Vorteil, da je nach vorliegendem Fahrmodus eine andere Fahrsituation und insbesondere eine andere Beanspruchung des Fahrzeugs, insbesondere des Fahrwerks, vorliegt. Beispielsweise kann es sich bei dem Fahrmodus um einen Sportmodus, Komfortmodus, Eco-Modus oder um einen Geländemodus handeln. Der jeweilige aktuell eingestellte Fahrmodus hat besonderen Einfluss auf die durchzuführende Dämpfung des Fahrzeugaufbaus und insbesondere der Dämpfung des Fahrzeugs im Allgemeinen. Insbesondere kann der Einstellparameter beziehungsweise eine Kennlinie des Einstellparameters über den jeweils aktuell gewählten Fahrmodus variabel appliziert werden, so dass für unterschiedlich gewählte Fahrmodi qualitativ unterschiedliche Fahrverhalten ermöglicht werden können. Dadurch kann zusätzlich die Unterscheidungserlebbarkeit der einzelnen Fahrmodi für die Passagiere des Fahrzeugs und/oder für den Fahrer des Fahrzeugs untereinander gesteigert werden.

In einem weiteren Ausführungsbeispiel ist vorgesehen, dass für das Ansteuern des zumindest einen Dämpfers zusätzlich eine Fahrzeuginformation des Fahrzeugs und/oder eine Beladungsinformation des Fahrzeugs und/oder eine Umgebungsinformation einer Umgebung des Fahrzeugs berücksichtigt wird. Dadurch kann die aktuell durchzuführende und/oder die unmittelbar bevorstehend durchzuführende Dämpfung des Fahrzeugs beziehungsweise des Fahrzeugaufbaus situationsabhängiger und insbesondere situationsangepasster erfolgen, da die verschiedensten Einflussgrößen, welche die Dämpfung beziehungsweise die Bewegung des Fahrzeugaufbaus beeinflussen, berücksichtigt werden. Beispielsweise können spezielle Signale bezüglich der Fahrzeuginformation und/oder Beladungsinformation und/oder Umgebungsinformation der Steuer- und/oder Regeleinheit zur Verfügung gestellt werden, so dass diese bei der Ansteuerung des Dämpfers berücksichtigt werden können.

Beispielsweise kann es sich bei der Fahrzeuginformation um einen aktuellen Fahrzeugzustand des Fahrzeugs und/oder von Fahrzeugkomponenten und/oder von Fahrzeugsystemen handeln. Mit der Beladungsinformation kann beispielsweise eine Art und/oder ein Umfang und/oder ein Gewicht und/oder eine Größe der im Fahrzeug geladenen Ladungen charakterisiert werden. Diese können beispielsweise durch Fahrzeugsysteme und/oder Fahrzeugsteuergeräte ermittelt und bereitgestellt werden. Mit Hilfe von Umfeldsensoriken und/oder von externen Informationsstellen können spezielle Umgebungsinformationen der Umgebung des Fahrzeugs zur Verfügung gestellt werden. Dabei sind hier insbesondere bevorstehende Straßenschäden des vorausliegenden Streckenabschnitts oder eine Beschaffenheit des vorausliegenden Streckenabschnitts und/oder eine Straßenbeschaffenheit und/oder eine Wetterinformation von Bedeutung. Ebenso können noch vielzählige weitere umfangreiche Informationen für das Ansteuern des zumindest einen Dämpfers berücksichtigt werden, um eine möglichst harmonische Bewegung des Fahrzeugaufbaus zu erreichen.

Ein nicht beanspruchter Aspekt der Offenbarung betrifft ein Steuerungs- und/oder Regelungssystem mit einer Steuer- und/oder Regeleinheit, zumindest einem Dämpfer und einer Auswerteeinheit, wobei das Steuerungs- und/oder Regelungssystem zum Durchführen eines Verfahrens nach einem der vorhergehenden Aspekte oder einer vorteilhaften Weiterbildung daraus ausgebildet ist. Insbesondere kann das vorhin geschilderte Verfahren mit dem soeben geschilderten Steuerungs- und/oder Regelungssystem durchgeführt werden. Beispielsweise kann das Steuerungs- und/oder Regelungssystem als intelligentes, elektronisches Fahrzeugdämpfungssystem bezeichnet werden. Optional kann das Steuerungs- und/oder Regelungssystem als elektronisches System zur Beeinflussung einer Bewegung eines Fahrzeugaufbaus bezeichnet werden.

In einem Ausführungsbeispiel des vorher geschilderten nicht beanspruchten Aspekts kann vorgesehen sein, dass der zumindest eine Dämpfer als 1-Ventil-Regeldämpfer, insbesondere als semi-aktiver Stoßdämpfer, ausgebildet ist. Insbesondere kann der Dämpfer derart beschaffen beziehungsweise ausgebildet sein, dass eine möglichst harmonische Bewegung des Fahrzeugaufbaus realisiert werden kann.

Ein weiterer Aspekt der Erfindung betrifft ein Fahrzeug mit einem Steuerungs- und/oder Regelungssystem gemäß dem nicht beanspruchten Aspekt oder einer vorteilhaften Weiterbildung daraus.

Insbesondere kann es sich bei dem Fahrzeug um einen Personenkraftwagen oder um einen Lastkraftwagen handeln. Beispielsweise kann das Kraftfahrzeug pro Fahrzeugachse zwei Dämpfer aufweisen, so dass an jeder Radaufhängung beziehungsweise in jedem Bereich eines Fahrzeugrades ein Dämpfer vorhanden ist. Somit kann Unebenheiten auf der Straße durch Dämpfen entgegengewirkt werden. Beispielsweise können mit Hilfe des Steuerungs-und/oder Regelungssystems mehrere, insbesondere alle, Dämpfer des Fahrzeugs angesteuert, insbesondere synchron angesteuert, werden.

Im Folgenden werden Ausführungsbeispiele der Erfindung beschrieben. Hierzu zeigt:
- Fig. 1: eine schematische Darstellung eines Fahrzeugs und eines Steuerungs- und/oder Regelungssystems;
- Fig. 2: ein nicht erfindungsgemäßes beispielhaftes Blockschaltbild einer Steuer- und Regeleinheit des Steuerungs-und/oder Regelungssystem aus Fig. 1;
- Fig. 3: beispielhafte Zeitverläufe der Geschwindigkeit einer Bewegung eines Fahrzeugaufbaus des Fahrzeugs aus Fig. 1;
- Fig. 4: einen beispielhaften Zeitverlauf der Dämpferhärte eines Dämpfers des Fahrzeugs aus Fig. 1; und
- Fig. 5: eine erfindungsgemäße Ausführungsform der Steuer- und Regeleinheit des Steuerungs-und/oder Regelungssystem aus Fig. 1.

In den Figuren sind funktionsgleiche Elemente jeweils mit denselben Bezugszeichen versehen.

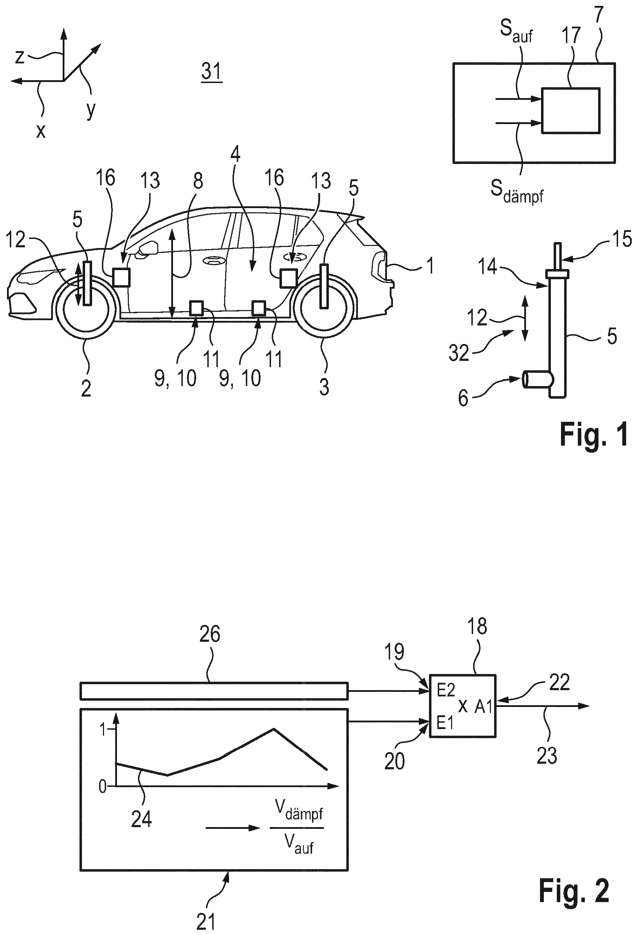

In der Fig. 1 ist beispielsweise ein Fahrzeug 1 dargestellt. Bei dem Fahrzeug 1 kann es sich beispielsweise um ein Kraftfahrzeug handeln.

Das Kraftfahrzeug 1 weist beispielsweise vier Räder 2, 3 auf (hier sind in der dargestellten Seitenansicht nur zwei der vier Räder zu sehen). Die Räder 2, 3 können mittels einer jeweiligen Radaufhängung an einem Fahrzeugaufbau 4 des Fahrzeugs 1 befestigt beziehungsweise mit diesem verbunden sein. Der Fahrzeugaufbau 4 beinhaltet beispielsweise die Fahrzeugkarosserie mit der Fahrgastzelle beziehungsweise dem Fahrgastinnenraum. Zwischen den Rädern 2, 3 und dem Fahrzeugaufbau 4 kann beispielsweise jeweils ein Dämpfer 5 angeordnet sein. Bei dem Dämpfer 5 kann es sich beispielsweise um einen Stoßdämpfer, einen semi-aktiven Stoßdämpfer, einen 1-Ventil-Regeldämpfer oder um einen anderweitig ausgestalteten Stoßdämpfer handeln. Die jeweiligen Dämpfer 5 beziehungsweise der Dämpfer 5 können parallel zu einer nicht dargestellten Feder angeordnet sein. Insbesondere ist der Dämpfer 5 als semi-aktiver Stoßdämpfer ausgebildet. Bei einem derart ausgestalteten Dämpfer 5 kann durch Anlegen eines Steuersignals an ein Stellmittel 6 des Dämpfers 6 die Dämpferkraft variiert werden.

Das Stellmittel 6 kann beispielsweise als elektromagnetisches Ventil ausgebildet sein, so dass das Steuersignal ein Steuerstrom für das Ventil ist.

Beispielsweise kann ein, insbesondere zentrales, Steuerungs- und/oder Regelungssystem 7 vorgesehen sein, mit welchem der zumindest eine Dämpfer 5 oder mehrere Dämpfer 5 des Fahrzeugs 1 gesteuert und/oder geregelt werden kann. Somit kann mit Hilfe des Steuerungs-und/oder Regelungssystems je nach aktueller Dämpfungsanforderung des Fahrzeugs 1 der Dämpfer 5 angesteuert und insbesondere geregelt werden.

Beispielsweise bewegt beziehungsweise schwingt der Fahrzeugaufbau 4, wenn das Fahrzeug 1 über unebene Straßen beziehungsweise über einen unebenen Boden fährt. Damit dies ausgeglichen beziehungsweise kompensieren werden kann, wird der Dämpfer 5 benötigt. Dieser kann entsprechend mit Hilfe des Steuerungs- und/oder Regelungssystems 7 entsprechend gesteuert beziehungsweise angesteuert beziehungsweise geregelt werden. Insbesondere kann also mit Hilfe des Steuerungs- und/oder Regelungssystems 7 eine Bewegung 8 des in seinen Bewegungsabläufen steuerbaren oder regelbaren Fahrzeugaufbaus 4 beeinflusst werden. Dies dient dazu, dass trotz einer unebenen Straße der Fahrkomfort für die Passagiere des Fahrzeugs 1 nicht verschlechtert wird. Insbesondere kann dabei die Bewegung 8 des Fahrzeugaufbaus 4 vertikal (in z-Richtung), also senkrecht zu der Straße beziehungsweise zu dem Fahrzeugunterboden des Fahrzeugs 1 beeinflusst werden.

Um insbesondere eine harmonische und komfortable Bewegung beziehungsweise Ausgleichsbewegung des Fahrzeugaufbaus 4 mit Hilfe des Dämpfers 5 realisieren zu können, werden bestimmte Stellgrößen benötigt. Zum einen kann wenigstens eine Aufbaubewegungsinformation 26 (vergleiche Fig. 2) bezüglich der Bewegung 8 des Fahrzeugaufbaus 4 an zumindest einem Messpunkt 9 des Fahrzeugaufbaus 4 mittels eines Sensorsystems 10 ermittelt beziehungsweise erfasst werden. Insbesondere kann dies an einer Stelle, also an dem Messpunkt 9, durchgeführt werden, oder es können mehrere, also verschiedene, Messpunkte 9 beziehungsweise Messpositionen verwendet werden. Beispielsweise kann hierzu das Sensorsystem 10 zumindest einen Beschleunigungssensor, insbesondere einen Vertikalbeschleunigungssensor 11, aufweisen. Dieser kann beispielsweise fest am Fahrzeugaufbau 4 angeordnet beziehungsweise befestigt sein, insbesondere im Bereich des Messpunkts 9.

Des Weiteren kann wenigstens eine Dämpferbewegungsinformation 32 bezüglich einer Bewegung 12 des Dämpfers 5 mittels eines Sensorsystems 13 erfasst beziehungsweise ermittelt werden. Bei der Bewegung 12 des Dämpfers 5 handelt es sich um eine In-sich-Bewegung des Dämpfers 5, also eine Relativbewegung von zwei Dämpferteilen 14, 15 zueinander.

Beispielsweise kann das Sensorsystem 13 zumindest einen Sensor, insbesondere einen Wegsensor 16, aufweisen. Insbesondere kann an jedem Rad 2, 3 des Fahrzeugs 1 jeweils ein Wegsensor 16 angeordnet sein. Beispielsweise können die Wegsensoren 16 als Relativsensoren ausgebildet sein, so dass diese eine Veränderung des Abstands des Fahrzeugaufbaus 4 von einem jeweiligen Rad 2, 3 messen. Ebenso können die Wegsensoren 16 als Drehwinkel-Wegsensoren ausgebildet sein.

Beispielsweise können die Sensorsysteme 10, 13 kommunikativ vernetzt sein oder als übergeordnetes System betrachtet werden.

Beispielsweise kann das Steuerungs- und/oder Regelungssystem 7 Bestandteil des Fahrzeugs 1 oder dazu separat ausgebildet sein und eine elektronische Auswerteeinheit 17 aufweisen. Beispielsweise kann es sich bei der elektronischen Auswerteeinheit 17 um ein Steuergerät handeln. Mit Hilfe der Auswerteeinheit 17 kann die Information bezüglich der Bewegung 8 und die Information bezüglich der Bewegung 12 verarbeitet und insbesondere dem Steuerungs- und/oder Regelungssystem 7 zur Verfügung gestellt werden. Des Weiteren kann das Steuerungs- und/oder Regelungssystem 7 über Signal- beziehungsweise Steuerungsleitungen mit dem Stellmittel 6 des Dämpfers 5, den Wegsensoren 16 und den Beschleunigungssensoren 11 verbunden werden. Insbesondere weisen die Bewegungen 8, 12 eine Richtung in z-Richtung oder entgegengesetzt der z-Richtung auf.

Die Fig. 2 zeigt ein Blockschaltbild einer Steuer- und/oder Regeleinheit 18. Beispielsweise kann es sich bei der Steuer- und/oder Regeleinheit 18 um einen Dämpferregler zum Steuern und/oder Regeln des Dämpfers 5 handeln. Beispielsweise kann das Steuerungs- und/oder Regelungssystem 7 eine Steuer- und/oder Regeleinheit 18 aufweisen, mittels welcher aller Dämpfer 5 des Fahrzeugs 1 gesteuert werden können. Ebenso denkbar ist, dass das Steuerungs- und/oder Regelungssystem 7 jeweils eine Steuer- und/oder Regeleinheit für jeden Dämpfer 5 aufweist.

Beispielsweise weist die Steuer- und/oder Regeleinheit 18 einen ersten und einen zweiten Eingang E1, E2 auf. Mit dem ersten Eingang E1 kann die Aufbaubewegungsinformation 26 als erste Eingangsgröße 19 der Steuer- und/oder Regeleinheit 18 zugeführt werden. Für die zweite Eingangsgröße 20 des zweiten Eingangs E2 wird zunächst mit Hilfe der Auswerteeinheit 17 ein Einstellparameter 21 ermittelt beziehungsweise berechnet. Bei dem Einstellparameter 21 kann es sich beispielsweise um einen Wirkfaktor beziehungsweise um einen Faktor handeln. Dieser wird dadurch ermittelt, indem ein Verhältnis zwischen der wenigstens einen Dämpferbewegungsinformation 32 und der wenigstens einen Aufbaubewegungsinformation 26 bestimmt wird. Mit anderen Worten wird die Bewegung 8 des Fahrzeugaufbaus 4 und die Bewegung 12 des Dämpfers 5 in Relation beziehungsweise ins Verhältnis gesetzt.

Beispielsweise kann die Steuer- und/oder Regeleinheit 18 als Operationsmodul (im mathematischen Sinne) betrachtet werden. Die beiden Eingangsgrößen 19, 20 werden durch entsprechende mathematische Operationen miteinander kombiniert, so dass am Ausgang A1 eine entsprechende Ausgangsgröße 22 vorliegt. Insbesondere kann als Ausgangsgröße 22 zumindest wenigstens ein Steuersignal 23 bereitgestellt werden. Mit diesem Steuersignal 23 kann der zumindest eine Dämpfer 5 angesteuert beziehungsweise betrieben werden. Folglich erfolgt die Ansteuerung des zumindest einen Dämpfers 5 anhand des Verhältnisses aus den Bewegungen 8 und 12.

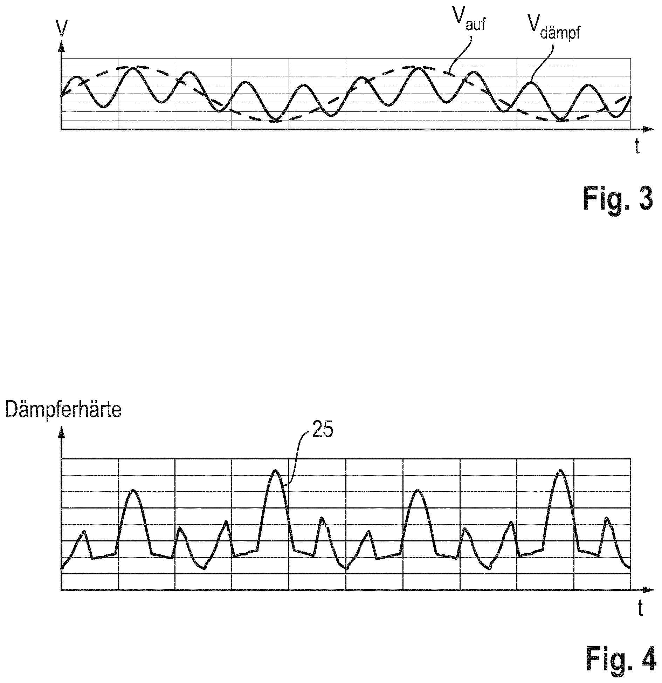

In der Fig. 3 ist zum einen ein beispielhafter Verlauf einer Geschwindigkeit V_{auf} der Bewegung 8 des Fahrzeugaufbaus 4 und eine Dämpfergeschwindigkeit V_{dämpf} des Dämpfers 5 zeitlich dargestellt. Somit wird insbesondere mittels der wenigstens einen Aufbaubewegungsinformation 26 die Geschwindigkeit V_{auf} der Bewegung 8 des Fahrzeugaufbaus 4 und mit der Dämpfergeschwindigkeit V_{dämpf} die wenigstens eine Dämpferbewegungsinformation 32 des Dämpfers 5 charakterisiert. Diese sind hier in einem schematischen Zeitverlauf dargestellt. Für die Ermittlung beziehungsweise Bestimmung des Einstellparameters 21 wird die Dämpfergeschwindigkeit V_{dämpf} zu der Geschwindigkeit V_{auf} der Bewegung 8 des Fahrzeugaufbaus 4 ins Verhältnis gesetzt, wobei mit diesem Verhältnis eine Funktion 24 gebildet wird. Mit Hilfe dieser Funktion 24 wird also beispielsweise ein Wirkungsfaktor als Einstellparameter 21 zwischen 0 und 1 bereitgestellt und als zweite Eingangsgröße 20 der Steuer- und/oder Regeleinheit 18 übertragen.

Einen beispielhaften Verlauf des Verhältnisses der Geschwindigkeiten V_{dämpf} zu V_{auf} ist in der Fig. 2 zu sehen. Somit kann der Einstellparameter 21 als ein Funktionswert der Funktion 24 angesehen werden.

Insbesondere kann die Ausgangsgröße 22 der Steuer- und/oder Regeleinheit 18 so ermittelt werden, indem ein jeweiliger zeitlicher Wert eines zeitlichen Verlaufs der Geschwindigkeit V_{auf} mit einem zeitlich dazu korrespondierenden Funktionswert des zeitlichen Verlaufs der Funktion 24 multipliziert wird. Folglich wird der augenblickliche Wert, welcher am ersten Eingang E1 anliegt, mit dem zeitlichen Wert, welcher am Eingang E2 anliegt, multipliziert. Dieser erfolgt insbesondere in einem zeitlich kontinuierlich fortlaufenden Prozess. Somit kann zu jedem Zeitpunkt eine situationsangepasste Ansteuerung des Dämpfers 5 erfolgen. Die Fig. 4 zeigt einen beispielhaften zeitlichen Verlauf der eingestellten Dämpferhärte 25 beziehungsweise Dämpfercharakteristik des Dämpfers 5 nach der Ansteuerung des Dämpfers 5 mittels des Steuersignals 23. Insbesondere kann mit Hilfe des Steuersignals 23 der zumindest eine Dämpfer 5 derart angesteuert werden, dass die Dämpfercharakteristik beziehungsweise die Dämpferhärte 25, insbesondere an die aktuelle Fahrsituation und/oder einen aktuellen Fahrmodus angepasst wird.

Der gezeigte Verlauf in der Fig. 4 ist insbesondere in Relation zu den beiden Geschwindigkeitsverläufen der Graphik aus Fig. 3 zu betrachten. Die so angepasste Dämpferhärte 25 beziehungsweise Dämpfung des Dämpfers 5 stellt einen diracfunktionsähnlichen Verlauf dar. Im Vergleich zu dem in Fig. 3 gezeigten Verläufen weist der Verlauf in Fig. 4 an den Stellen, bei welchen der Verlauf der Geschwindigkeit V_{auf} in seinem Scheitelpunkt beziehungsweise Scheitel ist, einen in sich gestreckten Verlauf auf. In dem jeweiligen Scheitelpunkt findet eine kontinuierliche Streckung statt, wobei diese jeweils einen gleichmäßigen Anstieg und Abfall aufweisen. Die dargestellte Dämpferhärte 25 weist keinen beziehungsweise nur minimalen, negativen Verlauf gegenüber dem Verlauf der Geschwindigkeit V_{auf} der Bewegung 8 auf. Insbesondere sind hier im Vergleich zu den Ansätzen des Stands der Technik keine vertikalen Flanken zu sehen. Insbesondere ist hier veranschaulicht dargestellt, dass es zu keinem harten Schalten beziehungsweise Umschalten des Dämpfers 5 kommt. Diese Vorteile resultiert speziell aus der Berücksichtigung des Geschwindigkeitsverhältnisses.

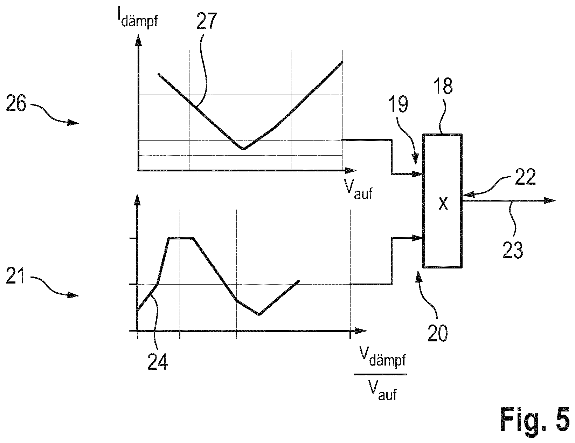

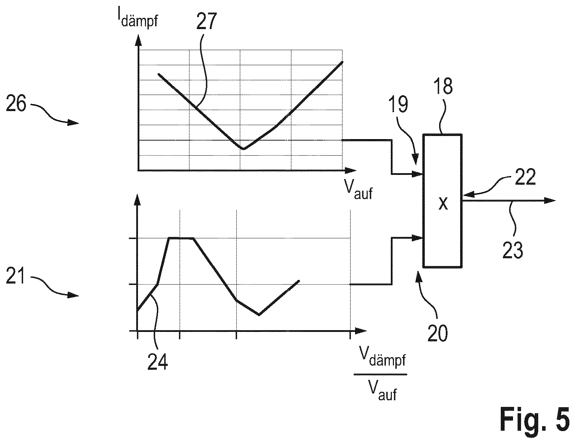

Die Fig. 5 zeigt eine erfindungsgemäße Ausführungsform der Steuer- und/oder Regeleinheit 8. Dabei wird hier nochmals auf die erste Eingangsgröße 19 eingegangen. Erfindungsgemäß beinhaltet die erste Eingangsgröße 19 die Aufbaubewegungsinformation 26. Diese weist erfindungsgemäß eine Relation beziehungsweise eine Funktion 27 zwischen der Stromstärke I_{dämpf} des Dämpfers 5 zu der Geschwindigkeit V_{auf} der Bewegung 8 des Fahrzeugaufbaus 4 auf.

Somit kann je nach Geschwindigkeit V_{auf} eine entsprechende Stromstärke I_{dämpf} als Funktion in der Steuer- und/oder Regeleinheit 18 zur Verfügung gestellt werden.

Erfindungsgemäß wird die Stromstärke I_{dämpf} des zumindest einen Dämpfers 5 in Abhängigkeit von der Dämpferbewegungsinformation 32 variiert, um beispielsweise ein Problem bezüglich einer Frequenzverhärtung verhindern zu können. Insbesondere wird mit der Stromstärke I_{dämpf} die Dämpferhärte 25 des Dämpfers 5 eingestellt.

Beispielsweise kann das Steuersignal 23 als Steuerstrom bezeichnet werden, mit welchem die Dämpferhärte 25 des Dämpfers 5 eingestellt werden kann.

Insbesondere wird erfindungsgemäß die bereitgestellte Stromstärke I_{dämpf} an dem ersten Eingang E1 mit dem Einstellparameter 21 multipliziert, so dass am Ausgang A1 ein neuer Vertikalstrom zur Ansteuerung des Dämpfers 5 bereitgestellt ist. Beispielsweise kann die Dämpferbewegungsinformation 32 mit einem Dämpfersignal S_{dämpf} und die Geschwindigkeit V_{auf} der Bewegung 8 der Auswerteeinheit 17 zur Verfügung gestellt werden, so dass mittels dieser beiden Signale S_{auf} und S_{dämpf} für die Ermittlung des Einstellparameters 21 verwendet werden können. Diese beiden Signale S_{auf} und S_{dämpf} können im gleichen Frequenzbereich beziehungsweise in einem vorgegebenen Frequenzbereich gefiltert beziehungsweise vorgefiltert werden. Dies kann vor der Ermittlung des Einstellparameters 21 erfolgen. Insbesondere können diese beiden Signale S_{auf} und S_{dämpf} zur Laufzeit gefiltert werden, so dass eventuelle Störungen gefiltert werden können.

Beispielsweise können mit Hilfe des erfindungsgemäßen Verfahrens bezüglich der Ansteuerung des Dämpfers 5 mittels des Steuersignals 23 verschiedene Fahrmodi variiert werden. Somit kann eine modusabhängige Applikation unterschiedlicher Regelungen beziehungsweise Steuerungsansätze durchgeführt werden. Hierzu kann beispielsweise ein Vier-Quadranten-Regler-Ansatz verwendet werden, um beispielsweise einen Komfortmodus, einen Normalmodus oder einen Sportmodus umzusetzen. Somit kann mit anderen Worten ausgedrückt mit Hilfe der Einstellparameter 21, welche die jeweilige Funktion wiederspiegeln, in Abhängigkeit von einem aktuellen Fahrmodus des Fahrzeugs 1 verändert beziehungsweise eingestellt werden.

Zusätzlich kann für das Ansteuern des Dämpfers 5 eine Fahrzeuginformation des Fahrzeugs 1 und/oder eine Beladungsinformation des Fahrzeugs 1 und/oder Umgebungsinformationen der Umgebung 31 des Fahrzeugs 1 berücksichtigt werden. Dabei sind insbesondere die Eigenschaften der Straße von Bedeutung. Insbesondere kann mit Hilfe des angesteuerten Dämpfers 5 eine Vertikaldynamik des Fahrzeugs 1 dynamisch angepasst werden.

Beispielsweise kann das Fahrzeug 1 auf eine Bodenschwelle beziehungsweise Bodenwelle treffen. Dabei federt das Rad 2, 3 gegen den Fahrzeugaufbau 4. Der Dämpfer 5 geht dabei in Druckstufe und hebt den Aufbau 4 an. Dabei wird nun der Dämpfer 5 so angesteuert, dass der Dämpfer 5 weich geschaltet wird, solange der Dämpfer 5 noch in der Druckstufe und der Fahrzeugaufbau 4 in einer Aufwärtsbewegung (positive z-Richtung) ist. Erst am Scheitelpunkt der Bodenschwelle, wenn der Dämpfer 5 in die Zugstufe wechselt, wird ein Stromsteller bezüglich der Stromstärke durchgeführt, um den Fahrzeugaufbau 4 in seiner Aufwärtsbewegung zu bremsen. Diese wird dadurch erreicht, dass zusätzlich zu der Aufbaubewegung auch die Dämpferbewegung betrachtet und zur Entscheidung herangezogen wird, ob eine zusätzliche Anpassung der Härte des Dämpfers 5 angemessen ist. Durch das vorgeschlagene Verfahren kann insbesondere bei einer Bewegungsrichtung des Dämpfers 5 und des Fahrzeugsaufbaus 4 in derselben Richtung trotzdem der Fahrkomfort erhöht werden.

Insbesondere ermöglicht das vorgeschlagene Verfahren den Dämpferstrom I_{dämpf} des Dämpfers 5 moderat und nicht radfrequent in Abhängigkeit von der Dämpfer- zu Aufbaubewegung zu reduzieren oder zu verstärken.

### Bezugszeichenliste

- 1: Fahrzeug
- 2: Rad
- 3: Rad
- 4: Fahrzeugaufbau
- 5: Dämpfer
- 6: Stellmittel
- 7: Steuerung- und/oder Regelungssystem
- 8: Bewegung des Fahrzeugaufbaus
- 9: Messpunkt
- 10: Sensorsystem
- 11: Vertikalbeschleunigungssensor
- 12: Bewegung des Dämpfers
- 13: Sensorsystem
- 14: Dämpferteil
- 15: Dämpferteil
- 16: Wegsensor
- 17: Auswerteeinheit
- 18: Steuerungs- und/oder Regeleinheit
- 19: erste Eingangsgröße
- 20: zweite Eingangsgröße
- 21: Einstellparameter
- 22: Ausgangsgröße
- 23: Steuersignal
- 24: Funktion des Geschwindigkeitsverhältnisses
- 25: Dämpferhärte
- 26: Aufbaubewegungsinformation
- 27: Funktion des Dämpferstroms zur Geschwindigkeit V_{auf}
- 31: Umgebung des Fahrzeugs
- 32: Dämpferbewegungsinformation
- I_{dämpf}: Dämpferstrom
- S_{auf}: Aufbausignal
- S_{dämpf}: Dämpfersignal
- V_{dämpf}: Dämpfergeschwindigkeit
- V_{aufbau}: Geschwindigkeit der Bewegung des Fahrzeugaufbaus

## Patentansprüche

1. Verfahren zur Beeinflussung einer Bewegung (8) eines Fahrzeugaufbaus (4) eines Fahrzeugs (1), wobei
- wenigstens eine Aufbaubewegungsinformation (26) des Fahrzeugaufbaus (4) an zumindest einem Messpunkt (9) des Fahrzeugaufbaus (4) mittels eines Sensorsystems (10) ermittelt wird, aufweisend:
- Ermitteln wenigstens einer Dämpferbewegungsinformation (32) zumindest eines Dämpfers (5) des Fahrzeugs (1), mit welchem die Bewegung des Fahrzeugaufbaus (4) beeinflusst werden kann, mittels eines Sensorsystems (13);
- Bereitstellen der ermittelten wenigstens einen Dämpferbewegungsinformation (32) und der ermittelten wenigstens einen Aufbaubewegungsinformation (26) an eine Auswerteeinheit (17);
- Bestimmen eines Einstellparameters (21) in Abhängigkeit von einem Verhältnis zwischen der wenigstens einen Dämpferbewegungsinformation (32) und der wenigstens einen Aufbaubewegungsinformation (26) durch die Auswerteeinheit (17);
- Bereitstellen der wenigstens einen Aufbaubewegungsinformation (26) als erste Eingangsgröße (19) an eine Steuer- und/oder Regeleinheit (18) des Fahrzeugs (1), mit welchem der zumindest eine Dämpfer (5) angesteuert werden kann, und Bereitstellen des ermittelten Einstellparameters (21) als zweite Eingangsgröße (20) an die Steuer- und/oder Regeleinheit (18);
- Ermitteln wenigstens eines Steuersignals (23) in Abhängigkeit von der ersten und der zweiten Eingangsgröße (19, 20) mittels der Steuer- und/oder Regeleinheit (18) und Bereitstellen des Steuersignals (23) als Ausgangsgröße (22) der Steuer-und/oder Regeleinheit (18); und
- Ansteuern des zumindest einen Dämpfers (5) mit dem ermittelten wenigstens einen Steuersignal (23), wodurch die Bewegung (8) des Fahrzeugaufbaus (4) beeinflusst wird,
- eine Geschwindigkeit (V_{auf}) der Bewegung (8) des Fahrzeugaufbaus (4) als wenigstens eine Aufbaubewegungsinformation (26) und eine Dämpfergeschwindigkeit (V_{dämpf}) des zumindest einen Dämpfers (5) als wenigstens eine Dämpferbewegungsinformation (32) ermittelt wird,
**dadurch gekennzeichnet, dass**
- für das Bestimmen des Einstellparameters (21) die Dämpfergeschwindigkeit (V_{dämpf}) zu der Geschwindigkeit (V_{auf}) der Bewegung (8) des Fahrzeugaufbaus (4) ins Verhältnis gesetzt wird, wobei mit dem Verhältnis von Dämpfergeschwindigkeit (V_{dämpf}) zu dieser Geschwindigkeit (V_{auf}) eine Funktion (24) gebildet wird,
- in Abhängigkeit von der Dämpferbewegungsinformation (32) eine Stromstärke (I_{dämpf}) des zumindest einen Dämpfers (5) variiert wird, und
- mit der Aufbaubewegungsinformation (26) eine Relation zwischen der Stromstärke (I_{dämpf}) des zumindest einen Dämpfers (5) zu der Geschwindigkeit (V_{auf}) der Bewegung (8) als erste Eingangsgröße (19) der Steuer- und/oder Regeleinheit (18) bereitgestellt wird.

2. Verfahren nach Anspruch 1,
**dadurch gekennzeichnet, dass**
mit dem zumindest einen angesteuerten Dämpfer (5) eine Vertikaldynamik des Fahrzeugs (1) dynamisch angepasst wird.

3. Verfahren nach Anspruch 1 oder 2,
**dadurch gekennzeichnet, dass**
mit dem wenigstens einen Steuersignal (23) der zumindest eine Dämpfer (5) derart angesteuert wird, dass eine Dämpfercharakteristik, insbesondere eine Dämpferhärte (25), des zumindest einen Dämpfers (5) angepasst wird.

4. Verfahren nach einem der vorhergehenden Ansprüche,
**dadurch gekennzeichnet, dass**
die Ausgangsgröße (22) der Steuer- und/oder Regeleinheit (18) so ermittelt wird, indem ein zeitlicher Wert eines zeitlichen Verlaufs der Geschwindigkeit (V_{auf}) der Bewegung (8) mit einem zeitlich dazu korrespondierenden Funktionswert eines zeitlichen Verlaufs der Funktion (24) multipliziert wird.

5. Verfahren nach einem der vorhergehenden Ansprüche,
**dadurch gekennzeichnet, dass**
die wenigstens eine Dämpferbewegungsinformation (32) mit einem Dämpfersignal (S_{dämpf}) und die wenigstens eine Aufbaubewegungsinformation (26) als Aufbausignal (S_{auf}) der Auswerteeinheit (17) bereitgestellt werden, wobei das Dämpfersignal (S_{dämpf}) und das Aufbausignal (S_{auf}) in einem vorgegebenen Frequenzbereich gefiltert werden.

6. Verfahren nach einem der vorhergehenden Ansprüche,
**dadurch gekennzeichnet, dass**
der Einstellparameter (21) in Abhängigkeit von einem Fahrmodus des Fahrzeugs (1) verändert wird.

7. Verfahren nach einem der vorhergehenden Ansprüche,
**dadurch gekennzeichnet, dass**
für das Ansteuern des zumindest einen Dämpfers (5) zusätzlich eine Fahrzeuginformation des Fahrzeugs (1) und/oder eine Beladungsinformation des Fahrzeugs (1) und/oder eine Umgebungsinformation einer Umgebung (31) des Fahrzeugs (1) berücksichtigt wird.

8. Fahrzeug (1) mit einem Fahrzeugaufbau (4), einem Sensorsystem (10, 13) und einem Steuerungs- und/oder Regelungssystem (7), wobei das Steuerungs- und/oder Regelungssystem (7) eine Steuer- und/oder Regeleinheit (18), zumindest einen Dämpfer (5) und eine Auswerteeinheit (17) aufweist, wobei das Steuerungs- und/oder Regelungssystem (7) zum Durchführen eines Verfahrens nach einem der Ansprüche 1 bis 7 ausgebildet ist.

9. Fahrzeug (1) nach Anspruch 8,
**dadurch gekennzeichnet, dass**
der zumindest eine Dämpfer (5) als 1-Ventil-Regeldämpfer, insbesondere als semi-aktiver Stoßdämpfer, ausgebildet ist.

## Claims

1. Method for influencing a movement (8) of a vehicle body (4) of a vehicle (1), wherein
- at least one body movement information item (26) relating to the vehicle body (4) is ascertained at at least one measuring point (9) of the vehicle body (4) by means of a sensor system (10), the method having:
- ascertaining at least one damper movement information item (32) relating to at least one damper (5) of the vehicle (1), with which damper the movement of the vehicle body (4) can be influenced, by means of a sensor system (13);
- providing the ascertained at least one damper movement information item (32) and the ascertained at least one body movement information item (26) to an evaluation unit (17);
- the evaluation unit (17) determining an adjustment parameter (21) on the basis of a ratio between the at least one damper movement information item (32) and the at least one body movement information item (26);
- providing the at least one body movement information item (26) as a first input variable (19) to an open-loop and/or closed-loop control unit (18) of the vehicle (1), with which the at least one damper (5) can be controlled, and providing the ascertained adjustment parameter (21) as a second input variable (20) to the open-loop and/or closed-loop control unit (18);
- ascertaining at least one open-loop control signal (23) on the basis of the first and the second input variable (19, 20) by means of the open-loop and/or closed-loop control unit (18) and providing the open-loop control signal (23) as an output variable (22) of the open-loop and/or closed-loop control unit (18); and
- controlling the at least one damper (5) with the ascertained at least one open-loop control signal (23), thereby influencing the movement (8) of the vehicle body (4),
- a speed (V_{auf}) of the movement (8) of the vehicle body (4) is ascertained as at least one body movement information item (26) and a damper speed (V_{dämpf}) of the at least one damper (5) is ascertained as at least one damper movement information item (32),
**characterized in that**
- for determining the adjustment parameter (21), the damper speed (V_{dämpf}) is set against the speed (V_{auf}) of the movement (8) of the vehicle body (4) as a ratio, wherein with the ratio of the damper speed (V_{dämpf}) to this speed (V_{auf}), a function (24) is formed,
- on the basis of the damper movement information item (32), a current intensity (I_{dämpf}) of the at least one damper (5) is varied, and
- with the body movement information item (26), a relationship between the current intensity (I_{dämpf}) of the at least one damper (5) to the speed (V_{auf}) of the movement (8) is provided as the first input variable (19) to the open-loop and/or closed-loop control unit (18).

2. Method according to claim 1,
**characterized in that**
with the at least one controlled damper (5), vertical dynamics of the vehicle (1) are dynamically adapted.

3. Method according to claim 1 or 2,
**characterized in that**
with the at least one open-loop control signal (23), the at least one damper (5) is controlled in such a way that a damper characteristic, in particular a damper stiffness (25), of the at least one damper (5) is adapted.

4. Method according to any of the preceding claims,
**characterized in that**
the output variable (22) of the open-loop and/or closed-loop control unit (18) is ascertained by multiplying a temporal value from a temporal curve of the speed (V_{auf}) of the movement (8) by a temporally corresponding function value from a temporal curve of the function (24).

5. Method according to any of the preceding claims,
**characterized in that**
the at least one damper movement information item (32) is provided with a damper signal (S_{dämpf}) and the at least one body movement information item (26) is provided as a body signal (S_{auf}) of the evaluation unit (17), wherein the damper signal (S_{dämpf}) and the body signal (S_{auf}) are filtered within a specified frequency range.

6. Method according to any of the preceding claims,
**characterized in that**
the adjustment parameter (21) is changed on the basis of a driving mode of the vehicle (1).

7. Method according to any of the preceding claims,
**characterized in that**
for controlling the at least one damper (5), vehicle information relating to the vehicle (1) and/or load information relating to the vehicle (1) and/or environment information relating to an environment (31) of the vehicle (1) is additionally taken into account.

8. Vehicle (1) with a vehicle body (4), a sensor system (10, 13), and an open-loop and/or closed-loop control system (7), wherein the open-loop and/or closed-loop control system (7) has an open-loop and/or closed-loop control unit (18), at least one damper (5), and an evaluation unit (17), wherein the open-loop and/or closed-loop control system (7) is designed to perform a method according to any of claims 1 to 7.

9. Vehicle (1) according to claim 8,
**characterized in that**
the at least one damper (5) is designed as a 1-valve control damper, in particular as a semi-active shock absorber.

## Revendications

1. Procédé permettant d'influencer un mouvement (8) d'une carrosserie de véhicule (4) d'un véhicule (1), dans lequel
- au moins une information de mouvement de carrosserie (26) de la carrosserie de véhicule (4) est établie en au moins un point de mesure (9) de la carrosserie de véhicule (4) au moyen d'un système à capteurs (10), présentant :
- l'établissement d'au moins une information de mouvement d'amortisseur (32) d'au moins un amortisseur (5) du véhicule (1), avec lequel le mouvement de la carrosserie de véhicule (4) peut être influencé, au moyen d'un système à capteurs (13) ;
- la fourniture de l'au moins une information de mouvement d'amortisseur (32) établie et de l'au moins une information de mouvement de carrosserie (26) établie à une unité d'évaluation (17) ;
- la détermination d'un paramètre de réglage (21) en fonction d'un rapport entre l'au moins une information de mouvement d'amortisseur (32) et l'au moins une information de mouvement de carrosserie (26) par l'unité d'évaluation (17) ;
- la fourniture de l'au moins une information de mouvement de carrosserie (26) comme première grandeur d'entrée (19) à une unité de commande et/ou de régulation (18) du véhicule (1), avec laquelle l'au moins un amortisseur (5) peut être commandé, et la fourniture du paramètre de réglage (21) établi comme seconde grandeur d'entrée (20) à l'unité de commande et/ou de régulation (18) ;
- l'établissement d'au moins un signal de commande (23) en fonction de la première et de la seconde grandeur d'entrée (19, 20) au moyen de l'unité de commande et/ou de régulation (18) et la fourniture du signal de commande (23) comme grandeur de sortie (22) de l'unité de commande et/ou de régulation (18) ; et
- la commande de l'au moins un amortisseur (5) avec l'au moins un signal de commande (23) établi, moyennant quoi le mouvement (8) de la carrosserie de véhicule (4) est influencé,
- une vitesse (V_{auf}) du mouvement (8) de la carrosserie de véhicule (4) est établie en tant qu'au moins une information de mouvement de carrosserie (26) et une vitesse d'amortisseur (V_{dämpf}) de l'au moins un amortisseur (5) est établie en tant qu'au moins une information de mouvement d'amortisseur (32),
**caractérisé en ce que**
- pour la détermination du paramètre de réglage (21), la vitesse d'amortisseur (V_{dämpf}) est mise en rapport avec la vitesse (V_{auf}) du mouvement (8) de la carrosserie de véhicule (4), dans lequel une fonction (24) est formée avec le rapport de la vitesse d'amortisseur (V_{dämpf}) à ladite vitesse (V_{auf}),
- en fonction de l'information de mouvement d'amortisseur (32), une intensité de courant (I_{dämpf}) de l'au moins un amortisseur (5) varie, et
- avec l'information de mouvement de carrosserie (26), une relation entre l'intensité de courant (I_{dämpf}) de l'au moins un amortisseur (5) et la vitesse (V_{auf}) du mouvement (8) est fournie comme première grandeur d'entrée (19) de l'unité de commande et/ou de régulation (18).

2. Procédé selon la revendication 1,
**caractérisé en ce que**
avec l'au moins un amortisseur (5) commandé, une dynamique verticale du véhicule (1) est adaptée de manière dynamique.

3. Procédé selon la revendication 1 ou 2,
**caractérisé en ce que**
l'au moins un amortisseur (5) est commandé avec l'au moins un signal de commande (23) de telle sorte qu'une caractéristique d'amortisseur, en particulier une dureté d'amortisseur (25), de l'au moins un amortisseur (5) est adaptée.

4. Procédé selon l'une des revendications précédentes,
**caractérisé en ce que**
la grandeur de sortie (22) de l'unité de commande et/ou de régulation (18) est ainsi établie en multipliant une valeur temporelle d'une courbe temporelle de la vitesse (V_{auf}) du mouvement (8) par une valeur fonctionnelle temporellement correspondante d'une courbe temporelle de la fonction (24).

5. Procédé selon l'une des revendications précédentes,
**caractérisé en ce que**
l'au moins une information de mouvement d'amortisseur (32) comportant un signal d'amortisseur (S_{dämpf}) et l'au moins une information de mouvement de carrosserie (26) sont fournies comme signal de carrosserie (S_{auf}) à l'unité d'évaluation (17), dans lequel le signal d'amortisseur (S_{dämpf}) et le signal de carrosserie (S_{auf}) sont filtrés dans un domaine fréquentiel prédéfini.

6. Procédé selon l'une des revendications précédentes,
**caractérisé en ce que**
le paramètre de réglage (21) est modifié en fonction d'un mode de conduite du véhicule (1).

7. Procédé selon l'une des revendications précédentes,
**caractérisé en ce que**
pour la commande de l'au moins un amortisseur (5), une information de véhicule du véhicule (1) et/ou une information de charge du véhicule (1) et/ou une information d'environnement d'un environnement (31) du véhicule (1) sont en outre prises en compte.

8. Véhicule (1) comportant une carrosserie de véhicule (4), un système à capteurs (10, 13) et un système de commande et/ou de régulation (7), dans lequel le système de commande et/ou de régulation (7) présente une unité de commande et/ou de régulation (18), au moins un amortisseur (5) et une unité d'évaluation (17), dans lequel le système de commande et/ou de régulation (7) est configuré pour réaliser un procédé selon l'une des revendications 1 à 7.

9. Véhicule (1) selon la revendication 8,
**caractérisé en ce que**
l'au moins un amortisseur (5) est réalisé sous forme d'amortisseur de régulation à une soupape, en particulier d'amortisseur semi-actif.
